## Europäisches Patentamt
## European Patent Office
## Office européen des brevets

(19)

(11) Veröffentlichungsnummer: **0 034 310**
**B1**

(12) **EUROPÄISCHE PATENTSCHRIFT**

(45) Veröffentlichungstag der Patentschrift:
17.08.83

(51) Int. Cl.³: **H 04 N 5/04, H 04 N 5/44**

(21) Anmeldenummer: **81100838.2**

(22) Anmeldetag: **06.02.81**

(54) Schaltung zur Gewinnung eines Zeilenrücklaufimpulses in einem Fernsehempfänger.

(30) Priorität: **16.02.80 DE 3005826**

(43) Veröffentlichungstag der Anmeldung:
**26.08.81 Patentblatt 81/34**

(45) Bekanntmachung des Hinweises auf die Patenterteilung:
**17.08.83 Patentblatt 83/33**

(84) Benannte Vertragsstaaten:
**AT BE CH DE FR GB IT LI LU NL SE**

(56) Entgegenhaltungen:
**DE-A-2 159 653**
**DE-B-1 252 732**
**DE-B-2 211 100**

(73) Patentinhaber: **Licentia Patent-Verwaltungs-GmbH, Theodor-Stern-Kai 1, D-6000 Frankfurt/Main 70 (DE)**

(72) Erfinder: **Goseberg, Walter, Dipl.-Ing., Kopenhagener Strasse 81, D-3000 Hannover 91 (DE)**

(74) Vertreter: **Einsel, Robert, Dipl.-Ing., Theodor-Stern-Kai 1, D-6000 Frankfurt/Main 70 (DE)**

EP 0 034 310 B1

BUNDESDRUCKEREI BERLIN

## Schaltung zur Gewinnung eines Zeilenrücklaufimpulses in einem Fernsehempfänger

In einem Fernsehempfänger werden bekanntlich Zeilenrücklaufimpulse für verschiedene Zwecke benötigt, z. B. für den Phasenvergleich für die Zeilensynchronisierung, für die Steuerung einer Störschutzschaltung bei Überlastung der Zeilenendstufe, für die getastete Schwundregelung, für die Auftastung oder Austastung des Farbsynchronsignals, zur Klemmung des Videosignals und dergleichen.

Diese Rücklaufimpulse werden im allgemeinen von einer Zusatzwicklung des Zeilentransformators abgenommen. Diese Lösung hat den Vorteil, daß alle Phasenabweichungen im Ablenkstrom selbst erfaßt und ausgeregelt werden, wenn der Rücklaufimpuls für die Zeilensynchronisierung verwendet wird. In manchen Fällen ist eine Zusatzwicklung am Zeilentransformator unerwünscht, weil diese die Gesamtstreuinduktivität des Zeilentransformators erhöht und damit die für die Hochspannungsgewinnung wichtige Abstimmung der Hochspannungswicklung auf eine hohe, z. B. 9. Harmonische der Frequenz der Rücklaufschwingung erschwert. Man ist daher bemüht, die Primärwicklung und die Hochspannungswicklung des Zeilentransformators je als eine einzige Wicklung auszubilden und möglichst auf Zusatzwicklungen zu verzichten.

Es ist auch denkbar, anstelle des Rücklaufimpulses von der Zeilenendstufe einen Impuls vom Zeilenoszillator selbst oder einem nachgeschalteten Verstärker abzuleiten. Dann werden aber Phasenabweichungen im Zeilenablenkstrom selbst durch die Regelschaltung nicht mehr erfaßt, so daß es zu einer Bildverschiebung kommen kann, die nicht ausgeregelt wird. Ebenso ist es möglich, den Rücklaufkondensator zu unterteilen und gegebenenfalls mit Hilfe einer Umkehrstufe die gewünschten negativen Rücklaufimpulse zu gewinnen.

Es ist auch bekannt, in den Weg des Zeilenablenkstromes die Primärwicklung eines Übertragers einzuschalten, von dessen Sekundärwicklung der Rücklaufimpuls abgenommen wird. Diese Lösung erfordert aber einen zusätzlichen Übertrager.

Es wurde auch vorgeschlagen (Patentanmeldung DE-A-2 951 381), den Rücklaufimpuls von einer Wicklung abzunehmen, die mit der im Weg des Zeilenablenkstromes liegenden, zur Einstellung der Bildbreite dienenden sogenannten Amplitudenspule gekoppelt ist. Dabei wurden bereits Maßnahmen getroffen, die Amplitude der Rücklaufimpulse bei der Einstellung des Zeilenablenkstromes weitestgehend konstant zu halten. Dort verblieb jedoch noch eine Änderung dieser Amplitude um etwa 10%.

Der Erfindung liegt die Aufgabe zugrunde, aus dem Weg des Zeilenablenkstromes einen Rücklaufimpuls abzuleiten, dessen Amplitude von dem jeweils eingestellten Wert des Zeilenablenkstromes weitestgehend unabhängig ist. Diese Aufgabe wird durch die im Anspruch 1 beschriebene Erfindung gelöst. Vorteilhafte Weiterbildungen der Erfindung sind in den Unteransprüchen beschrieben.

Die Erfindung beruht auf folgender Erkenntnis. Wenn man die Primärwicklung des oben genannten Übertragers im Ablenkstromweg zu der Amplitudenspule als reine Luftspule mit relativ geringer Kopplung ausbildet, so wäre zunächst an sich die Amplitude des von der Sekundärwicklung abgenommenen Rücklaufimpulses nach wie vor von der des Zeilenablenkstromes abhängig. Der räumliche Abstand zwischen der Amplitudenspule und der Primärwicklung läßt sich aber so wählen, daß diese Abhängigkeit durch den in die Amplitudenspule hineingedrehten Kern ausgeglichen werden kann. Dieses ist so zu erklären, daß der in die Amplitudenspule hineingedrehte und sich der Primärwicklung nähernde Kern bei Erhöhung der Induktivität der Amplitudenspule auch die Kopplung zwischen der Amplitudenspule und der Primärwicklung in dem gewünschten Maße vergrößert. Der Kern dringt auch in seiner eingedrehten Endstellung nicht in die Primärwicklung ein. Ein wesentlicher Vorteil besteht darin, daß ein einziger Spulenkörper sowohl die Amplitudenspule als auch den Übertrager zur Auskopplung des Rücklaufimpulses aufnehmen kann. Der Übertrager zur Auskopplung des Rücklaufimpulses bildet also kein zusätzliches Bauteil.

Die Erfindung wird anhand der Zeichnung an einem Ausführungsbeispiel erläutert. Darin zeigt

Fig. 1 ein Schaltbild der Erfindung,

Fig. 2 den Aufbau des Spulenkörpers mit den einzelnen Wicklungen und

Fig. 3 Kurven zur Erläuterung der Wirkungsweise.

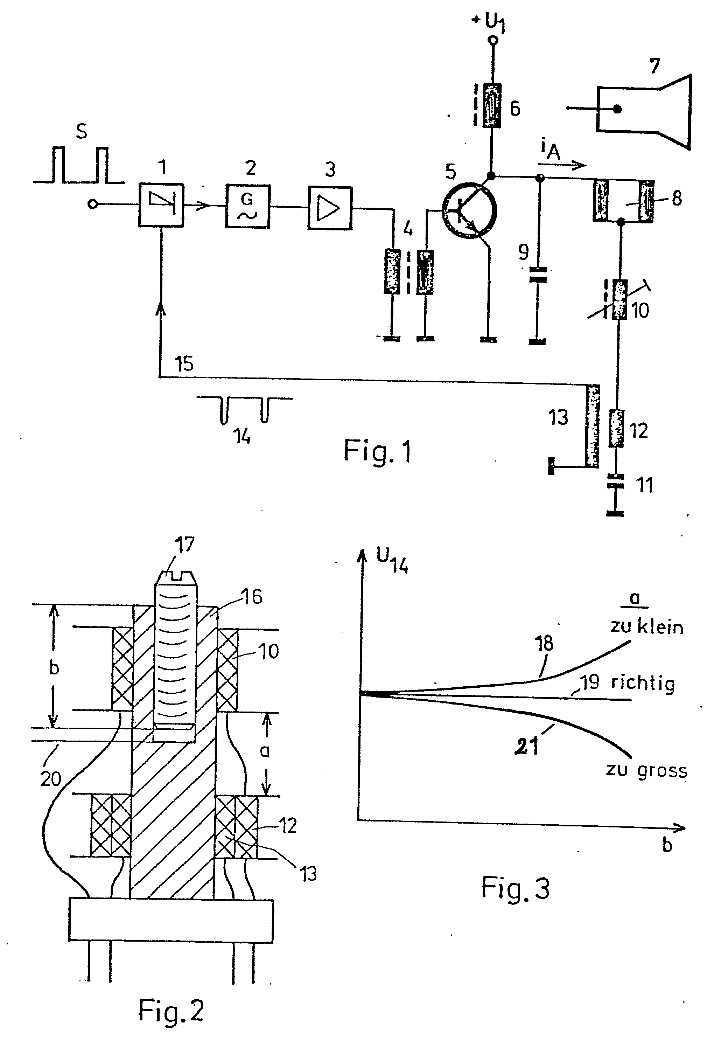

Fig. 1 zeigt die vom Videosignal abgetrennten Zeilensynchronimpulse S, die Phasenvergleichsstufe 1, den Zeilenoszillator 2, die Treiberstufe 3, den Treibertrafo 4, den Zeilenendstufen-Transistor 5, die Primärwicklung 6 des Zeilentrafos, die Bildröhre 7, die Zeilenablenkspulen 8, den Rücklaufkondensator 9, die zur Einstellung der Bildbreite dienende veränderbare Amplitudenspule 10 und den Tangenskondensator 11. In den Weg des Zeilenablenkstromes $i_A$ ist die Primärwicklung 12 eingeschaltet, die als Luftspule mit der Sekundärwicklung 13 gekoppelt ist. Diese liefert den Zeilenrücklaufimpuls 14 für die Phasenvergleichsstufe 1 über die Leitung 15.

Gemäß Fig. 2 sind die Amplitudenspule 10 einerseits und die beiden Wicklungen 12, 13 andererseits in einem Abstand a axial gegeneinander versetzt auf dem Spulenkörper 16 angeordnet. Die Primärwicklung 12 liegt dabei oberhalb der Sekundärwicklung 13. Der Abstand a ist nun so bemessen, daß bei Einstellung der Amplitude des Zeilenablenkstromes $i_A$ und damit der Bildbreite mittels der Amplitudenspule 10 die Amplitude des Rücklaufimpulses 14 praktisch konstant bleibt.

Fig. 3 zeigt die Amplitude $U_{14}$ des Rücklaufimpulses 14 in Abhängigkeit von der Eindringtiefe b des Kernes 17 in den Spulenkörper 16. Bei Erhöhung von b wird die Induktivität der Spule 10 vergrößert, die Amplitude des Ablenkstromes $i_A$ und damit auch des Rücklaufimpulses 14 in unerwünschter Weise verkleinert. Dies ist durch die Kurve 21 angedeutet und gilt für den Fall, daß der Abstand a zu groß gewählt ist.

Wenn der Abstand a sehr klein ist, wird bei Vergrößerung von b die Kopplung zwischen der Amplitudenspule 10 und der Primärwicklung 12 und damit auch der Sekundärwicklung 13 derart vergrößert, daß $U_{14}$ mit steigendem b ansteigt. Dies ist durch die Kurve 18 angedeutet. Es läßt sich nun eine derartige Bemessung der Anordnung, insbesondere des Abstandes a, ermitteln, bei der die Amplitudenverringerung von $U_{14}$ bei Vergrößerung von b beim Hineindrehen des Kernes durch die steigende Kopplung gerade ausgeglichen wird und somit die Amplitude von $U_{14}$ konstant bleibt. Dies ist durch die Kurve 19 angedeutet.

Zur Verringerung der Induktivität der Spule 10 wird der Kern 17 nach oben aus dem Spulenträger 16 herausgedreht. Die Induktivität der Spule 10 könnte auch dadurch verringert werden, daß der Kern 17 nach unten aus dem Bereich der Spule 10 herausgedreht wird. Das hätte aber den Nachteil, daß dann der Kern 17 in den Bereich der Wicklungen 12, 13 gelangt und dann die Kopplung in unerwünschter Weise zu groß wird. Daher ist der Spulenträger so ausgebildet, daß der Kern 17 nur bis zum Punkt 20 hineingedreht werden kann. An dieser Stelle ist z. B. die mit einem Gewinde versehene Bohrung im Kern beendet und der Spulenträger massiv. Eine andere Möglichkeit besteht darin, in den Bereich des Spulenträgers 16 unterhalb des Punktes 20 in der Bohrung gar kein Gewinde mehr vorzusehen.

Bei einem praktisch erprobten Ausführungsbeispiel wurden folgende Windungszahlen gewählt:

Amplitudenspule 10: 115 Windungen
Primärwicklung 12: 20 Windungen
Sekundärwicklung 13: 500 Windungen.

## Patentansprüche

1. Schaltung zur Gewinnung eines Zeilenrücklaufimpulses (14) in einem Fernsehempfänger, insbesondere für die Phasenvergleichsstufe (1) für die Zeilensynchronisierung, wobei im Weg des Zeilenablenkstromes ($i_A$) eine zur Einstellung der Bildbreite dienende Amplitudenspule (10) mit einem Kern (17) und in Reihe dazu eine Primärwicklung (12) eines Übertragers liegt, dessen Sekundärwicklung (13) den Rücklaufimpuls (14) liefert, dadurch gekennzeichnet, daß die Amplitudenspule (10) und die Primärwicklung (12) auf demselben Spulenkörper (16) axial um einen solchen Betrag (a) gegeneinander versetzt angeordnet sind, daß die bei Erhöhung der Induktivität der Amplitudenspule (10) an sich auftretende Verringerung der Amplitude des Rücklaufimpulses (14) durch die durch die Kernbewegung verursachte erhöhte Kopplung zwischen Amplitudenspule (10) und Primärwicklung (12) ausgeglichen wird.

2. Schaltung nach Anspruch 1, dadurch gekennzeichnet, daß die Amplitudenspule (10) und die Primärwicklung (12) luftgekoppelte Spulen sind.

3. Schaltung nach Anspruch 1, dadurch gekennzeichnet, daß die Windungszahl der Primärwicklung (12) klein ist gegenüber der der Amplitudenspule (10).

4. Schaltung nach Anspruch 1, dadurch gekennzeichnet, daß die Windungszahl der Sekundärwicklung (13) groß ist gegenüber der der Primärwicklung (12).

5. Schaltung nach Anspruch 1, dadurch gekennzeichnet, daß der Spulenkörper (16) so ausgebildet ist, daß der Kern (17) zwar vollständig in die Amplitudenspule (10), jedoch nicht in den Bereich der Primärwicklung (12) hineingedreht werden kann.

## Claims

1. A circuit for deriving a line fly-back impulse (14) in a television receiver, especially for use in the phase comparison stage (1) for achieving the line synchronisation, wherein an amplitude coil (10) having a core (17) is located in the path of the line deflection current ($i_A$) which coil serves to determine the picture width and has connected in series with it a primary winding (12) of a transfer means, the secondary winding (13) of which delivers the fly-back impulse, characterized in that the amplitude coil (10) and the primary winding (12) are arranged co-axially on the same coil body (16), displaced from each other by such a distance (a) that the automatic reduction of the amplitude of the fly-back impulse (14) which occurs on increasing the inductance of the amplitude coil (10) is compensated by the increased coupling between the amplitude coil (10) and the primary winding (12) caused by the core movement.

2. A circuit according to Claim 1, characterized in that the amplitude coil (10) and the primary winding (12) are air-coupled coils.

3. A circuit according to Claim 1, characterized in that the number of turns of the primary winding (12) is small compared with that of the amplitude coil (10).

4. A circuit according to Claim 1, characterized in that the number of turns of the secondary winding (13) is large compared with that of the primary winding (12).

5. A circuit according to Claim 1, characterized in that the coil body (16) is so formed that the core (17) can be screwed all the way into the amplitude coil (10) but cannot however be screwed into the region of the primary winding (12).

**Revendications**

1. Montage pour la production d'une impulsion (14) de retour de balayage horizontal dans un televiseur couleur, en particulier pour l'étage (1) comparateur de phase servant à la synchronisation ligne, une bobine d'amplitude (10) pour le reglage de la largeur d'image étant insérée sur le trajet du courant de déviation horizontale (i_A), munie d'un noyau (17) et en série avec un enroulement primaire (12) d'un transformateur, dont l'enroulement secondaire (13) délivre l'impulsion de retour (14), ledit montage étant caractérisé en ce que la bobine d'amplitude (10) et l'enroulement primaire (12) sont disposés sur une même carcasse (16) avec un décalage axial (a) tel que la diminution d'amplitude de l'impulsion de retour (14) résultant d'un accroissement de l'inductance de la bobine d'amplitude (10) est compensée par l'augmentation du couplage entre la bobine d'amplitude (10) et l'enroulement primaire (12) produite par le déplacement du noyau.

2. Montage selon revendication 1, caractérisé en ce que la bobine d'amplitude (10) et l'enroulement primaire (12) sont des bobines sans fer.

3. Montage selon revendication 1, caractérisé en ce que le nombre de spires de l'enroulement primaire (12) est faible par rapport à celui de la bobine d'amplitude (10).

4. Montage selon revendication 1, caractérisé en ce que le nombre de spires de l'enroulement secondaire (13) est grand par rapport à celui de l'enroulement primaire (12).

5. Montage selon revendication 1, caractérisé en ce que la carcasse (16) est réalisée de façon que le noyau (17) puisse être vissé complètement dans la bobine d'amplitude (10), sans toutefois pénétrer dans la zone de l'enroulement primaire (12).

Fig. 1

Fig. 2

Fig. 3